(19) Europäisches Patentamt
European Patent Office
Office européen des brevets

(11) **EP 4 316 267 A1**

(12) **EUROPEAN PATENT APPLICATION**
published in accordance with Art. 153(4) EPC

(43) Date of publication:
**07.02.2024 Bulletin 2024/06**

(21) Application number: **22775671.5**

(22) Date of filing: **23.03.2022**

(51) International Patent Classification (IPC):
**A23L 11/00** (2021.01)        **A23L 11/30** (2016.01)
**A23L 11/65** (2021.01)

(52) Cooperative Patent Classification (CPC):
**A23L 11/00; A23L 11/30; A23L 11/65**

(86) International application number:
**PCT/JP2022/013435**

(87) International publication number:
**WO 2022/202889 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2021  JP 2021049036**

(71) Applicant: **Amano Enzyme Inc.**
**Nagoya-shi**
**Aichi 460-8630 (JP)**

(72) Inventor: **SATO, Yukihide**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **METHOD FOR MANUFACTURING PROCESSED SOYBEAN BEVERAGE**

(57)    The purpose of the present invention is to provide a novel technology for altering the soybean flavor of a soybean beverage and improving the palatability of the soybean beverage. In the present invention, a nut-like flavor is imparted to a processed soybean beverage obtained according to a method for manufacturing the processed soybean beverage that includes a step for causing laccase to act on the soybean beverage.

EP 4 316 267 A1

**Description**

TECHNICAL FIELD

The present invention relates to a method for manufacturing a processed soybean food or beverage product. More specifically, the present invention relates to a processing technology for imparting a nut-like flavor to a soybean food or beverage product.

BACKGROUND ART

Due to various backgrounds such as recent health boom, countermeasures against allergy problems, religious reasons, and an increase in demand inside home due to spread of infectious diseases, the consumed amount of soybean food or beverage products has significantly increased.

Soy milk, which is a representative example of soybean food or beverage products, includes "soy milk" produced only from soybean from which soybean pulp is removed and water and containing 8 wt% or more of a soybean solid component, "processed soy milk" containing 6 wt% or more of a soybean solid component and blended with additives such as sugar and rice oil to make it easy to drink, and "soy milk beverage" containing 2 wt% or more or 4 wt% of a soybean solid content and added with a taste of fruit juice, coffee, or the like.

The soybean food or beverage product such as soy milk have a unique grassy smell because soybean is used as a material as it is. For example, in the case of a food or beverage product to which a component other than soybean and water can be added on the basis of Food Labeling Standards, such as "processed soy milk" or "soy milk beverage", grassy smell is masked using a flavor, sugar, oil, or the like. As means for reducing the grassy smell, a method of adding palatinose (Patent Document 1), a method of adding perilla extract (Patent Document 2), and the like have been proposed.

PRIOR ART DOCUMENT

PATENT DOCUMENTS

Patent Document 1: Japanese Patent Laid-open Publication No. 2003-230365
Patent Document 2: Japanese Patent Laid-open Publication No. 2005-253348

SUMMARY OF THE INVENTION

PROBLEMS TO BE SOLVED BY THE INVENTION

In the soybean food or beverage product, although some methods for masking the unique flavor of soybean are known, the effect thereof is not yet sufficient. On the other hand, with the widespread use of the soybean food or beverage product, it is desired to further enhance the palatability in terms of taste while following the health trend.

Therefore, an object of the present invention is to provide a novel technology for altering the soybean flavor of a soybean food or beverage product and improving the palatability of the soybean food or beverage product.

MEANS FOR SOLVING THE PROBLEM

The present inventor has found that a nut-like flavor is added and a good taste is obtained by treating a soybean food or beverage product with a multi-copper oxidase. In view of the fact that it is merely known that a multi-copper oxidase merely exhibits a protein crosslinking action and that no, technical relevance is known between the nut-like flavor and the protein crosslinking and between the soybean food or beverage product and the nut-like flavor, the effect of imparting a nut-like flavor that should be irrelevant to the soybean to a soybean food or beverage product was extremely unexpected. That is, the present invention provides inventions of the following aspects.

Item 1. A method for manufacturing a processed soybean food or beverage product, the method including a step of causing a multi-copper oxidase to act on a soybean food or beverage product.
Item 2. The method described in item 1, in which the soybean food or beverage product is soy milk.
Item 3. The method described in item 1 or 2, in which the multi-copper oxidase is a laccase.
Item 4. The method described in item 3, in which the laccase is derived from the genus Trametes.

Item 5. The method described in any one of items 1 to 4, in which a protein content of the soybean food or beverage product is 1 g/100 ml or more.

Item 6. The method described in any one of items 1 to 5, in which the processed soybean food or beverage product is a beverage having a viscosity of 1 to 20 mPa-s.

Item 7. A nut-like flavor-imparting agent for a soybean food or beverage product, containing a multi-copper oxidase.

## ADVANTAGES OF THE INVENTION

According to the present invention, by treating a soybean food or beverage product with a multi-copper oxidase, a nut-like flavor can be imparted to the soybean food or beverage product.

## EMBODIMENTS OF THE INVENTION

1. Method for Manufacturing Processed Soybean Food or Beverage Product

A method for manufacturing a processed soybean food or beverage product of the present invention includes a step of causing a multi-copper oxidase to act on a soybean food or beverage product. Hereinafter, the method for manufacturing a processed soybean food or beverage product will be specifically described. In the present invention, "processing" refers to a treatment to impart a nut-like flavor, and the processed soybean food or beverage product refers to a soybean food or beverage product of an aspect in which a nut-like flavor is imparted to a soybean food or beverage product as a raw material.

The soybean food or beverage product used in the present invention is a beverage (a drinking product; soybean beverage) or a food (an edible product; soybean food) using soybean as a material. The soybean food or beverage product contains at least a crushed product of a cotyledon part of soybean seeds. The soybean food or beverage product may contain a crushed product of an embryonic axis and/or a seed coat in addition to the crushed product of the cotyledon part.

The soybean beverage may be a liquid composition containing at least a crushed product of a cotyledon part of soybean seeds in a state of being dispersed in water. The soybean beverage may contain a crushed product of an embryonic axis and/or a seed coat in a state of being dispersed in water, in addition to the crushed product of the cotyledon part. Specific examples of the soybean beverage include a liquid obtained by crushing and dispersing soybean in water, a liquid obtained by removing soybean pulp from a liquid obtained by crushing and dispersing soybean in water (that is, soy milk), and a liquid obtained by dissolving and/or dispersing dry powder (dry soy milk powder) prepared from these liquids again in water. Specific examples of the soybean food or beverage product include soybean powder and texturized soybean protein.

These soybean food or beverage products may be used singly or in combination of a plurality of kinds thereof. Among these soybean food or beverage products, a soybean beverage is preferable, and soy milk is more preferable.

The amount of the protein in the soybean food or beverage product is not particularly limited, and is, for example, 1 g/100 ml or more, preferably 2 g/100 ml or more, more preferably 3 g/100 ml or more, further preferably 3.5 g/100 ml or more, and even more preferably 4 g/100 ml or more. The upper limit of the protein amount range in the soybean food or beverage product is not particularly limited, and is, for example, 12 g/100 ml or less, 10 g/100 ml or less, 8 g/100 ml or less, 6 g/100 ml or less, 5 g/100 ml or less, or 4.5 g/100 ml or less.

The soybean solid content in the soybean food or beverage product is not particularly limited, and is, for example, 2 wt% or more, preferably 4 wt% or more, and more preferably 8 wt% or more. The upper limit of the soybean solid content range in the soybean food or beverage product is not particularly limited, and is, for example, 16 wt% or less, 14 wt% or less, 12 wt% or less, or 10 wt% or less.

The soybean food or beverage product used in the present invention is allowed to contain components other than soybean and water. Examples of the other components include a quality improving agent such as an emulsifier (such as sucrose fatty acid ester, phospholipid, monoglyceric fatty acid ester, organic acid monoglyceric fatty acid ester, sorbitan fatty acid ester, polyoxyethylene sorbitan fatty acid ester, polyglycerin fatty acid ester, or propylene glycol fatty acid ester) and a pH adjusting agent (such as sodium carbonate, sodium hydrogen carbonate, or calcium carbonate), a coloring agent, a flavor, a seasoning (such as dietary salt or sugar (sucrose)), and an auxiliary material (such as fruit juice or coffee). On the other hand, since the present invention is excellent in a nut-like flavor imparting effect to a soybean food or beverage product, the nut-like flavor can be effectively imparted and the palatability can be enhanced without using an additive (for example, an emulsifier, a flavor, a seasoning, or an auxiliary material) having a flavoring, seasoning, and/or foreign taste masking action. From such a viewpoint, preferred examples of the soybean food or beverage product to be used in the present invention include a soybean food or beverage product not containing an emulsifier, a flavor, a seasoning, and/or an auxiliary material, and more preferred examples thereof include a soybean food or beverage product not containing an emulsifier, a flavor, a seasoning, and an auxiliary material.

The multi-copper oxidase used in the present invention is a group of enzymes containing a plurality of copper atoms in a molecule and oxidizing polyphenol, methoxyphenol, diamine, bilirubin, ascorbic acid, and the like with molecular oxygen. The number of included copper atoms is usually 2 to 8 as known so far, but this number is not particularly limited because it varies depending on the state of the enzyme preparation at the time of analysis and the analysis method. Examples of the enzyme classified as the multi-copper oxidase include laccase, bilirubin oxidase, ascorbic acid oxidase, and ceruloplasmin.

These multi-copper oxidases may be used singly or in combination of a plurality of kinds thereof. Among these multi-copper oxidases, from the viewpoint of further enhancing the nut-like flavor imparting effect, laccase and bilirubin oxidase are preferable, and laccase is more preferable.

The laccase is an enzyme having phenol oxidase activity (EC1.10.3.2). Specific examples of the laccase include laccases derived from microorganisms such as fungi and bacteria, and more specific examples thereof include laccases derived from the genera Aspergillus, Neurospora, Podospora, Botrytis, Collybia, Fomes, Lentinus, Pleurotus, Pycnoporus, Pyricularia, Trametes, Rhizoctonia, Rigidoporus, Coprinus, Psatyrella, Myceliophtera, Schtalidium, Polyporus, Phlebia, Coriolus, and the like.

These laccases may be used singly or in combination of a plurality of kinds thereof. Among these laccases, from the viewpoint of further enhancing the nut-like flavor imparting effect, a laccase derived from the genus Trametes and a laccase derived from the genus Aspergillus (more preferably a laccase derived from Aspergillus oryzae) are preferable, and a laccase derived from the genus Trametes is further preferable.

The bilirubin oxidase is an enzyme that primarily acts on bilirubin (EC 1.3.3.5). Examples of the bilirubin oxidase include bilirubin oxidases derived from the genera Penicillium, Myrothecium, Trachyderma, and Bacillus.

These bilirubin oxidases may be used singly or in combination of a plurality of kinds thereof. Among these bilirubin oxidases, from the viewpoint of further enhancing the nut-like flavor imparting effect, a bilirubin oxidase derived from the genus Myrothecium (preferably, Myrothecium verrucaria) or derived from the genus Bacillus (preferably, Bacillus subtilis) is preferable.

The used amount of the multi-copper oxidase is not particularly limited, but the used amount of the multi-copper oxidase per 1 g of the protein is, for example, 0.005 mU or more. From the viewpoint of further enhancing the nut-like flavor imparting effect, the used amount of the multi-copper oxidase per 1 g of the protein is preferably 0.01 mU or more, more preferably 0.05 mU or more, and further preferably 0.1 mU or more, 0.5 mU or more, 1 mU or more, 5 mU or more, 10 mU or more, 15 mU or more, 20 mU or more, or 25 mU or more. The upper limit of the used amount range of the multi-copper oxidase is not particularly limited, and the used amount of the multi-copper oxidase per 1 g of the protein is, for example, 300 U or less, 30 U or less, 3 U or less, 100 mU or less, 40 mU or less, 30 mU or less, 25 mU or less, 20 mU or less, 15 mU or less, 10 mU or less, 5 mU or less, 1 mU or less, or 0.5 mU or less.

The used amount of the multi-copper oxidase per 1 g of the soybean solid content is, for example, 0.001 mU or more, preferably 0.01 mU or more, and more preferably 0.02 mU or more, 0.1 mU or more, 1 mU or more, 5 mU or more, or 10 mU or more. The upper limit of the used amount range of the multi-copper oxidase is not particularly limited, and the used amount of the multi-copper oxidase per 1 g of the soybean solid content is, for example, 200 U or less, 20 U or less, 2 U or less, 1 U or less, 200 mU or less, 20 mU or less, 5 mU or less, 1 mU or less, 0.5 mU or less, or 0.05 mU or less.

For the activity of the multi-copper oxidase, when 20 $\mu$L of an enzyme liquid is added to 20 $\mu$L of a 50 mM solution of 2,2'-Azino-di-[3-ethylbenzthiazoline sulfonate] (ABTS) as a substrate and 160 $\mu$L of a 125 mM sodium phosphate buffer solution, the mixture is reacted at 37°C, and an absorbance at 405 nm after 15 minutes and 0 minutes is measured, an amount of an enzyme catalyzing the oxidation of 1 $\mu$mol of ABTS per minute is defined as 1 unit (U).

In the step of causing a multi-copper oxidase to act on a soybean food or beverage product, a multi-copper oxidase is added to a soybean food or beverage product to prepare a soybean food or beverage product composition containing the soybean food or beverage product and the multi-copper oxidase, and the soybean food or beverage product composition is maintained in a heated state, thereby causing a reaction to produces a nut-like flavor to proceed.

The reaction temperature in the step of causing a multi-copper oxidase to act can be appropriately determined in consideration of the optimum temperature of the multi-copper oxidase and the like, and is, for example, 10 to 70°C, preferably 35 to 70°C, more preferably 40 to 60°C, and further preferably 45 to 55°C.

In the step of causing a multi-copper oxidase to act, it is also allowable to use a combination of other enzymes with the multi-copper oxidase.

The reaction time in the step of causing a multi-copper oxidase to act is not particularly limited, and is, for example, 10 minutes or longer, preferably 30 minutes or longer, and more preferably 1 hour or longer. The upper limit of the range of the reaction time is not particularly limited, and is, for example, 24 hours or shorter, 12 hours or shorter, 8 hours or shorter, 4 hours or shorter, or 2 hours or shorter.

The step of causing a multi-copper oxidase to act can be terminated by deactivating the multi-copper oxidase used. The deactivation method is not particularly limited, and examples thereof include deactivation at a high temperature (for example, 85 to 100°C).

The soybean food or beverage product composition after completion of the step of causing a multi-copper oxidase to act is cooled to obtain a processed soybean food or beverage product. The processed soybean food or beverage product obtained by the manufacturing method of the present invention can be provided as a food or beverage product having high palatability because the soybean flavor of the soybean food or beverage product is altered and a nut-like flavor is imparted. In the processed soybean food or beverage product obtained by the manufacturing method of the present invention, the appearance has changed to pink color tone as a result of the reaction of imparting a nut-like flavor, and such a change in appearance can be particularly remarkably confirmed when the processed soybean food is a beverage (processed soybean beverage). In the present invention, a preferred processed soybean food or beverage product is a beverage (processed soybean beverage) and processed soy milk is particularly preferable.

When the processed soybean food or beverage product obtained by the manufacturing method of the present invention is a beverage (processed soybean beverage), the processed soybean beverage can be obtained as a low-viscosity liquid without causing a rapid increase in viscosity such as gelation predicted from the protein crosslinking action known for a normal multi-copper oxidase even though the processed soybean beverage has been treated with a multi-copper oxidase. A specific viscosity of the processed soybean beverage is, for example, 1 to 20 mPa·s, preferably 1.5 to 12 mPa·s, more preferably 2 to 5 mPa·s, and further preferably 2.5 to 4 mPa-s. The viscosity refers to a viscosity measured at 20°C and a rotation speed of a rotor of a rolling ball viscometer viscometer of 1000 rpm.

The obtained processed soybean food or beverage product may be prepared as a dry soybean food or beverage product through a drying step. When the processed soybean food or beverage product is a beverage, the processed soybean food or beverage product can also be prepared as a solid processed soybean composition from which a soybean beverage to which a nut-like flavor is imparted is obtained when dissolved and/or dispersed in water. The drying method is not particularly limited, and examples thereof include freeze drying, vacuum drying, and spray drying. Examples of the shape of the solid processed soybean composition include powder, fine particles, and granules.

2. Nut-Like Flavor-Imparting Agent for Soybean Food or Beverage Product

As described above, the multi-copper oxidase can alter the soybean flavor of the soybean food or beverage product and impart a nut-like flavor. Therefore, the present invention also provides a nut-like flavor-imparting agent for a soybean food or beverage product, containing a multi-copper oxidase.

The types, used amounts, and the like of materials and components to be used in the nut-like flavor-imparting agent are as described in the section of "1. Method for Manufacturing Processed Soybean Food or Beverage Product".

EXAMPLES

Hereinafter, the present invention will be specifically described by means of Examples; however, the present invention is not to be construed as being limited to the following Examples.

(1) Materials

Soy milk: plain soy milk, protein concentration: 4.15 g/100 mL, soybean solid content: 8 wt% or more
Laccase: LC-Y120 (Amano Enzyme Inc.), laccase derived from the genus Trametes
Laccase: laccase derived from Aspergillus oryze
Bilirubin oxidase: bilirubin oxidase "Amano" 3 (Amano Enzyme Inc.), bilirubin oxidase derived from Myrothecium verrucaria
Bilirubin oxidase: bilirubin oxidase derived from Bacillus subtilis
Protease: TH-PC10F, protease derived from Geobacillus stearothermophilus
Glutaminase: GTSD-100NA, glutaminase derived from Bacillus amyloliquefaciens

(2) Enzyme Activity Value Measurement Method

(2-1) Multi-Copper Oxidase (Laccase, Bilirubin Oxidase) Activity Value Measurement Method

In the following Test Examples, the enzyme activity of the multi-copper oxidase was measured by the method described below using 2,2'-Azino-di-[3-ethylbenzthiazoline sulfonate] (ABTS, manufactured by Boehringer Mannheim) as a substrate.

To a microplate, 20 μL of a 50 mM ABTS solution, 160 μL of a 125 mM sodium phosphate buffer solution (pH7.0), and 20 μL of an enzyme liquid were added and mixed, the mixture was reacted at 37°C, and an absorbance at 405 nm after 15 minutes and 0 minutes was measured. The activity of catalyzing the oxidation of 1 μmol of ABTS per minute was defined as 1 unit (U), and was calculated by the following formula.

[Mathematical Formula 1]

$$\text{Laccase activity (U/g)} = (\text{Absorbance at 405 nm (after 15 minutes)} - \text{Absorbance at 405 nm (after 0 minutes)})/36 \times 0.57) \times n/15$$

36: absorbance coefficient
0.57: optical path length
n: dilution factor
15: reaction time (min)

(2-2) Protease Activity Measurement Method

After 5 mL of a 0.6% (w/v) casein solution (0.05 mol/L of sodium hydrogen phosphate, pH 8.0) was warmed at 37°C for 10 minutes, 1 mL of a sample solution containing a protease was added, and the mixture was immediately shaken. After this solution was left to stand at 37°C for 10 minutes, 5 mL of a trichloroacetic acid reagent (containing 1.8 (w/v)% trichloroacetic acid, 1.8 (w/v)% sodium acetate, and 0.33 mol/L acetic acid) was added, the mixture was shaken, and left to stand at 37°C for 30 minutes again, and the mixture was filtered. The first filtrate (3 mL) was removed, the next filtrate (2 mL) was weighed, 5 mL of a 0.55 mol/L sodium carbonate reagent and 1 mL of Folin's reagent (1 → 3) were added, and the mixture was shaken well and left to stand at 37°C for 30 minutes. An absorbance AT of this solution (enzymatic reaction solution) at a wavelength of 660 nm was measured using water as a control.
Separately, a solution (blank) was prepared by performing the same operation as in the enzymatic reaction solution except that 1 mL of a sample solution containing a protease was weighed, 5 mL of a trichloroacetic acid reagent (containing 1.8 (w/v)% trichloroacetic acid, 1.8 (w/v)% sodium acetate, and 0.33 mol/L acetic acid) was added, the mixture was shaken, 5 mL of the sample solution was then added, the mixture was immediately shaken and left to stand at 37°C for 30 minutes, and an absorbance AB of this solution was measured.
An amount of an enzyme which causes an increase in colored materials by Folin's reagent corresponding to 1 μg of tyrosine per minute was defined as 1 unit (1 U).
Each of 1 mL, 2 mL, 3 mL, and 4 mL of a 1 mg/mL tyrosine standard stock solution (0.2 mol/L of hydrochloric acid) was weighed, and a 0.2 mol/L hydrochloric acid reagent was added thereto to make 100 mL. Each solution (2 mL) was weighed, 5 mL of a 0.55 mol/L sodium carbonate reagent and 1 mL of Folin's reagent (1 → 3) were added, and the mixture was immediately shaken and left to stand at 37°C for 30 minutes. For these solutions, absorbances A1, A2, A3, and A4 at a wavelength of 660 nm were measured using, as a control, a solution obtained by weighing 2 mL of a 0.2 mol/L hydrochloric acid reagent and performing the same operation as described above. The absorbances A1, A2, A3, and A4 were plotted on the vertical axis and the amount (μg) of tyrosine in 2 mL of each solution was plotted on the horizontal axis to prepare a calibration curve, and the amount (μg) of tyrosine with respect to the absorbance difference of 1.

[Mathematical Formula 2]

$$\text{Protease activity (U/g, U/mL)} = (AT - AB) \times F \times 11/2 \times 1/10 \times 1/M$$

AT: absorbance of enzymatic reaction solution
AB: absorbance of blank
F: tyrosine amount (μg) when absorbance difference determined by tyrosine calibration curve is 1
11/2: conversion factor into total liquid amount after reaction stop
1/10: conversion factor into value per minute of reaction time
M: amount (g or mL) of sample in 1 mL of sample solution

(2-3) Glutaminase Activity Value Measurement Method

In the following Test Examples, the enzyme activity of the glutaminase was measured by the method described below using L-glutamine as a substrate.

In a test tube, 1 mL of an enzyme solution was weighed and left to stand in a constant-temperature water bath at 37°C for 5 minutes. To this solution, 1 mL of a 2% (w/v) L-glutamine solution (0.1 mol/L acetate buffer solution (pH 6.0)) preheated to 37°C, mixed, and left to stand for exactly 10 minutes. After standing, 1 mL of a 5% (v/v) perchloric acid reagent was added, mixed, and immediately placed in ice-water. After the mixture was left to stand for 1 minute or longer, 1 mL of a sodium hydroxide reagent (0.75 mol/L) was added and mixed to obtain a reaction solution. L-glutamic acid in the reaction solution was quantified using an L-glutamic acid measurement kit "YAMASA" NEO (manufactured by YAMASA CORPORATION). Under the present conditions, an amount of an enzyme producing 1 μmol of L-glutamic acid per minute was defined as 1 unit.

[Test Example 1]

The enzyme was dissolved in water to prepare an enzyme liquid. An enzyme liquid was added to plain soy milk so that the enzyme shown in Tables 1 and 2 had the indicated final concentration, and the mixture was reacted in a hot-water bath at 50°C for 90 minutes with stirring. Thereafter, the enzyme was deactivated in a hot-water bath at 90°C and cooled to room temperature. The obtained processed soy milk was evaluated as follows. The results are shown in Tables 1 and 2.

(Nut-Like Flavor Imparting Effect)

Seven monitors were allowed to drink processed soy milk, and a case where the nut-like flavor was sensed was rated as +1 point, a case where the nut-like flavor was not sensed was rated as 0 points, and the scores obtained by summing the ratings of the seven monitors were used as the evaluation of the nut-like flavor imparting effect. The plain soy milk of the raw material satisfies the standard of "Soy milk" of Japanese Agricultural Standards, and has grassy smell peculiar to soybean and no nut-like flavor.

(Viscosity)

The viscosity of the processed soy milk at 25°C was measured using a rolling ball viscometer (manufactured by KYOTO ELECTRONICS MANUFACTURING CO., LTD., EMS-1000, 1000 rpm, spherical probe: φ2 mm).

(Change in Appearance)

Sensory evaluation was performed by visual inspection to determine whether or not the appearance (color) of the processed soy milk was changed as compared with the appearance (color) of the plain soy milk of the raw material, and to determine what color is obtained when the appearance (color) of the processed soy milk was changed.

[Table 1]

|  |  |  | Comparative Example 1 | Example 1 | Example 2 | Example 3 | Example 4 | Example 5 | Example 6 |
|---|---|---|---|---|---|---|---|---|---|
| Laccase (LC-Y120) | | wt% | - | 0.3 | 0.1 | 0.01 | 0.001 | 0.1 | 0.1 |
| | | mU/1 g protein | - | 30 | 20 | 1 | 0.1 | 10 | 10 |
| | | mU/1 g soybean solid content | - | 13 | 9 | 0.4 | 0.04 | 4 | 4 |
| Protease (TH-PC10F) | | wt% | - | - | - | - | - | 0.025 | - |
| | | U/1 g protein | - | - | - | - | - | 600 | |
| | | U/1 g soybean solid content | | | | | | 280 | |
| Glutaminase (GTSD-100NA) | | wt% | - | - | - | - | - | - | 0.025 |
| | | U/1 g soybean solid content | - | - | - | - | - | - | 0.3 |
| Nut-like flavor imparting effect (point) | | | 0 | +7 | +7 | +7 | +7 | +7 | +7 |
| Viscosity (mPa·s) | | | 3.09 | 3.27 | 3.35 | 3.10 | 3.10 | 11.54 | 2.70 |
| Change in appearance (color) | | | None | Pink | Pink | Pink | Pink | Pink | Pink |

[Table 2]

| | | Comparative Example 1 | Comparative Example 2 | Comparative Example 3 | Comparative Example4 | Comparative Example 5 | Comparative Example 6 | Comparative Example 7 |
|---|---|---|---|---|---|---|---|---|
| Laccase (LC-Y120) | wt% | - | - | - | - | - | - | - |
| | mU/1 g protein | - | - | - | - | - | - | - |
| | mU/1 g soybean solid content | | | | | | | |
| Protease (TH-PC10F) | wt% | - | 0.003 | 0.025 | 0.075 | - | - | - |
| | U/1 g protein | - | 80 | 600 | 1800 | - | - | - |
| | U/1 g soybean solid content | - | 30 | 280 | 830 | - | - | - |
| Glutaminase (GTSD-100NA) | wt% | - | - | - | - | 0.003 | 0.025 | 0.075 |
| | U/1 g soybean solid content | - | - | - | - | 0.03 | 0.28 | 0.83 |
| Nut-like flavor imparting effect (point) | | 0 | 0 | 0 | 0 | 0 | 0 | 0 |
| Viscosity (mPa·s) | | 3.09 | 2.89 | 30.98 | 5.51 | 0.88 | 3.28 | 4.63 |
| Change in appearance (color) | | None | None | None | None | None | None | None |

As is apparent from Tables 1 and 2, by subjecting soy milk to a laccase treatment, grassy smell peculiar to soybean disappeared, a nut-like flavor that was a flavor completely different from that of soybean was imparted, and processed soy milk having high palatability was obtained (Examples 1 to 6). In Comparative Examples 1 to 7, none of the monitors answered that the nut-like flavor was sensed, whereas in Examples 1 to 6, all seven monitors answered that the nut-like flavor was sensed, so that the nut-like flavor imparting effect recognized in Examples 1 to 6 was remarkable. It was also recognized that only the processed soy milk obtained by subjecting soy milk to a laccase treatment to impart a nut-like flavor tended to have a pink appearance.

Since such an effect of imparting a nut-like flavor and an effect of discoloration associated therewith were not observed when other enzymes were used (Comparative Examples 2 to 7), it was shown that the effect was specific to the case of using a laccase.

In the processed soy milk obtained by subjecting soy milk to a laccase treatment, although a laccase having a crosslinking action was used, the expected significant thickening was not observed, and the processed soy milk had a low viscosity in all cases (Examples 1 to 6, particularly, Examples 1 to 4 and 6).

[Test Example 2]

The enzyme treatment was performed in the same manner as in Test Example 1, except that a laccase derived from Aspergillus oryze, a bilirubin oxidase derived from Myrothecium verrucaria, or a bilirubin oxidase derived from Bacillus subtilis was used. As a result, similarly to Examples 1 to 6 of Test Example 1, it was confirmed that the processed soy milk was colored in pink in all examples, so that the same nut-like flavor imparting effect as in Examples 1 to 6 could be inferred.

**Claims**

1. A method for manufacturing a processed soybean food or beverage product, the method comprising a step of causing a multi-copper oxidase to act on a soybean food or beverage product.

2. The method according to claim 1, wherein the soybean food or beverage product is soy milk.

3. The method according to claim 1 or 2, wherein the multi-copper oxidase is a laccase.

4. The method according to claim 3, wherein the laccase is derived from the genus Trametes.

5. The method according to any one of claims 1 to 4, wherein a protein content of the soybean food or beverage product is 1 g/100 ml or more.

6. The method according to any one of claims 1 to 5, wherein the processed soybean food or beverage product is a beverage having a viscosity of 1 to 20 mPa s.

7. A nut-like flavor-imparting agent for a soybean food or beverage product, comprising a multi-copper oxidase.

## INTERNATIONAL SEARCH REPORT

| International application No. |
| --- |
| **PCT/JP2022/013435** |

### A. CLASSIFICATION OF SUBJECT MATTER

*A23L 11/00*(2021.01)i; *A23L 11/30*(2016.01)i; *A23L 11/65*(2021.01)i
FI: A23L11/00 E; A23L11/65; A23L11/30

According to International Patent Classification (IPC) or to both national classification and IPC

### B. FIELDS SEARCHED

Minimum documentation searched (classification system followed by classification symbols)

A23L11/00; A23L11/30; A23L11/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/MEDLINE/EMBASE/BIOSIS/FSTA/CABA (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2007/015854 A1 (NOVOZYMES A/S) 08 February 2007 (2007-02-08)<br>claims 1-18, examples | 1-7 |
| X | WO 2005/070223 A1 (NOVOZYMES A/S) 04 August 2005 (2005-08-04)<br>claims 1-7, examples | 1-5, 7 |
| X | HOU, JunJie et al. Preparation of double-network tofu with mechanical and sensory toughness. International Journal of Food Science and Technology. 2016, 51, 962-969<br>materials and metods | 1-5, 7 |
| X | CN 109123602 A (UNIVERSITY OF SHANDONG) 04 January 2019 (2019-01-04)<br>claims 1-10, examples | 1-5, 7 |
| X | CN 108118078 A (SHANDONG YUWANG ECOLOGICAL FOOD INDUSTRY CO LTD) 05 June 2018 (2018-06-05)<br>claims 1-10, examples | 1-7 |
| P, X | CN 113647507 A (SHAANXI FUTURE ZHISHAN HEALTH TECH CO LTD) 16 November 2021 (2021-11-16)<br>claims 1-10, examples | 1-5, 7 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/013435** |

**C.  DOCUMENTS CONSIDERED TO BE RELEVANT**

| Category* | Citation of document, with indication, where appropriate, of the relevant passages | Relevant to claim No. |
|---|---|---|
| P, X | CN 113519690 A (SHAANXI FUTURE ZHISHAN HEALTH TECH CO LTD) 22 October 2021 (2021-10-22)<br>claims 1-10, examples | 1-5, 7 |
| P, X | WO 2021/187510 A1 (AMANO ENZYME INC) 23 September 2021 (2021-09-23)<br>claims 1-17, paragraphs [0042]-[0044] | 1-5, 7 |
| P, X | WO 2022/054879 A1 (AMANO ENZYME INC) 17 March 2022 (2022-03-17)<br>claims 1-10, examples | 1-5, 7 |
| P, X | WO 2022/054880 A1 (AMANO ENZYME INC) 17 March 2022 (2022-03-17)<br>claims 1-9, examples | 1-7 |

Form PCT/ISA/210 (second sheet) (January 2015)

**INTERNATIONAL SEARCH REPORT**
Information on patent family members

International application No.

**PCT/JP2022/013435**

| Patent document cited in search report | | | Publication date (day/month/year) | Patent family member(s) | | | Publication date (day/month/year) |
|---|---|---|---|---|---|---|---|
| WO | 2007/015854 | A1 | 08 February 2007 | US | 2007/0031577 | A1 | |
| | | | | EP | 1912519 | A1 | |
| WO | 2005/070223 | A1 | 04 August 2005 | (Family: none) | | | |
| CN | 109123602 | A | 04 January 2019 | (Family: none) | | | |
| CN | 108118078 | A | 05 June 2018 | (Family: none) | | | |
| CN | 113647507 | A | 16 November 2021 | (Family: none) | | | |
| CN | 113519690 | A | 22 October 2021 | (Family: none) | | | |
| WO | 2021/187510 | A1 | 23 September 2021 | (Family: none) | | | |
| WO | 2022/054879 | A1 | 17 March 2022 | (Family: none) | | | |
| WO | 2022/054880 | A1 | 17 March 2022 | (Family: none) | | | |

Form PCT/ISA/210 (patent family annex) (January 2015)

**EP 4 316 267 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003230365 A
- JP 2005253348 A